# EUROPEAN PATENT APPLICATION

(11) **EP 1 780 724 A1**
(43) Date of publication of application: **02.05.2007**
(21) Application number: 06016009.0
(22) Date of filing: 01.08.2006
(51) Int. Cl.: G11B 27/34, G11B 27/00

(54) **Method and apparatus for searching moving pictures in portable terminal**

(30) Priority: 01.11.2005 KR 20050103894
(71) Applicant: Samsung Electronics Co., Ltd., Suwon-si, Gyeonggi-Do (KR)
(72) Inventor: Yoon, Sung-Jae c/o Samsung Electronics Co., Ltd.,, Yeongtong-gu Suwon-si Gyeonggi-do (KR); Kang, Dong-Han c/o Samsung Electronics Co., Ltd.,, Yeongtong-gu Suwon-si Gyeonggi-do (KR); Shin, Jae-Gwan c/o Samsung Electronics Co., Ltd.,, Yeongtong-gu Suwon-si Gyeonggi-do (KR); Oh, Chang-Min c/o Samsung Electronics Co., Ltd.,, Yeongtong-gu Suwon-si Gyeonggi-do (KR)
(74) Representative: Lang, Johannes

(57) **Abstract**

A method and apparatus are provided for searching a moving picture in a portable terminal. When fast forward/rewind functions are performed in a moving picture play mode, search time for displaying the progress of fast forward/rewind and actual search time for performing fast forward/rewind in the moving picture play mode are matched to each other. When fast forward or rewind are selected in a moving picture play mode of the portable terminal, a first search time for displaying progress of fast forward and a second search time for performing fast forward or rewind are compared and the search time of at least one of the first search time and the second search time is adjusted by the difference.

## Description

### BACKGROUND OF THE INVENTION

### Field of the Invention:

The present invention generally relates to a method and apparatus for searching a moving picture in a portable terminal. More particularly, the present invention relates to a method for searching a moving picture in a portable terminal in which fast forward/rewind functions are performed in a moving picture play mode and search time for displaying the progress of fast forward/rewind to a user, and actual search time for performing fast forward/rewind in the moving picture play mode, are matched to each other.

### Description of the Related Art:

Traditional portable terminals have evolved into advanced devices capable of offering not only voice communication but also high-speed data transmission. If International Mobile Telecommunication-2000 (IMT-2000) mobile communication networks are commercially deployed, people can enjoy high-speed data communication as well as voice communication using portable terminals. Data processed by portable terminals for data communication may include packet data and video data. In addition, a portable terminal can display moving pictures by including a camera or TV receiver. Thus, portable terminals having a camera can photograph an image, display the photographed image as a moving or still picture, and transmit the photographed image screen.

When a moving picture is played in a portable terminal, fast forward/rewind and stop/pause functions may be performed on the played moving picture. If the forward/rewind function is selected during play of the moving picture, a progress bar is displayed on a display unit of the portable terminal to show the status of the fast forward/rewind process to a user. Upon completion of the fast forward/rewind process, play of the moving picture resumes with an Intra (I) frame at the time instant of the completion. However, if the 1-frame does not exist at the time of completing the fast forward/rewind process, the play of the moving picture resumes with a previous I-frame.

However, when the fast forward/rewind function is performed during play of a moving picture, the search speed of the fast forward/rewind, as displayed by a progress bar, is not matched with the actual search speed of forward/rewind. This results in a failure to search the moving picture with an accurate search time. Moreover, for this reason, an error may occur in the return to the actual time instant of moving picture play after completion of the fast forward/rewind.

### SUMMARY OF THE INVENTION

Accordingly, it is an object of the present invention to provide a method and apparatus for searching a moving picture in a portable terminal in which fast forward/rewind functions are performed in a moving picture play mode. Exemplary embodiments of the present invention provide for matching a search time for displaying the progress of fast forward/rewind to a user, and an actual search time for performing fast forward/rewind in the moving picture play mode.

According to one aspect of the present invention, there is provided a method and apparatus for searching a moving picture in a portable terminal. Exemplary embodiments of the present invention comprise comparing a first search time for displaying the progress of a moving picture search to a user, and a second search time for performing a function corresponding to the moving picture search if the moving picture search is selected in a moving picture play mode of the portable terminal. Exemplary embodiments of the present invention further comprise performing the moving picture search in the moving picture play mode while increasing one of the first search time and the second search time by a difference if the first search time and the second search time have a difference larger than a period of time.

According to another aspect of the present invention, there is provided a method for searching a moving picture in a portable terminal. Exemplary embodiments of the present invention comprise comparing a first search time for displaying the progress of fast forward to a user, and a second search time for performing fast forward if fast forward is selected in a moving picture play mode of the portable terminal. Exemplary embodiments of the present invention further comprise performing fast forward in the moving picture play mode while increasing one of the first search time and the second search time by a difference if the first search time and the second search time have a difference larger than a period of time.

### BRIEF DESCRIPTION OF THE DRAWINGS

The above and other objects, exemplary features, and advantages of the present invention will become more apparent by describing certain exemplary embodiments of the present invention with reference to the accompanying drawings, in which:
FIG. 1 is a block diagram of a portable terminal according to an exemplary embodiment of the present invention; and
FIG. 2 is a flowchart illustrating a method for searching a moving picture while matching search times in a moving picture play mode of a portable terminal according to an exemplary embodiment of the present invention.

Throughout the drawings, like reference numbers should be understood to refer to like elements, features, and structures.

### DETAILED DESCRIPTION OF EXEMPLARY EMBODIMENTS

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Also, descriptions of well-known functions and constructions are omitted for clarity and conciseness.

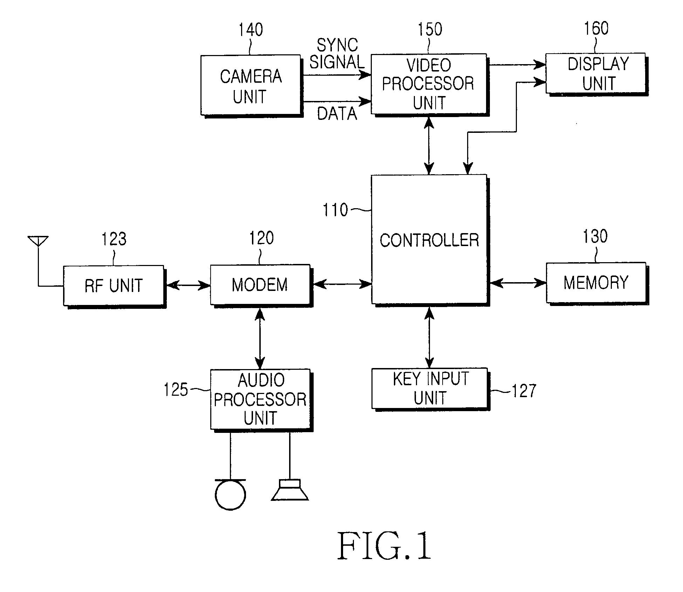

FIG. 1 is a block diagram of a portable terminal according to an exemplary embodiment of the present invention.

Referring to FIG. 1, a Radio Frequency (RF) unit 123 performs radio communication for the portable terminal. The RF unit 123 comprises an RF transmitter for up-converting a frequency of a transmission signal and amplifying the up-converted transmission signal. The RF unit 123 also comprises an RF receiver for low-noise-amplification of a received signal and down-converting a frequency of the low-noise-amplified signal. A modem 120 comprises a transmitter for encoding and modulating the transmission signal and a receiver for decoding and demodulating the received signal. An audio processor unit 125 may comprise a COder/DECoder (codec). The codec comprises a data codec processing packet data and an audio codec processing an audio signal. The audio processor unit 125 converts a digital audio signal received from the modem 120 into an analog signal through the audio codec for reproduction. The audio processor unit 125 can also convert an analog audio signal generated by a microphone into a digital audio signal through the audio codec for transmission to the modem 120. The codec may be separately provided or may be included in controller 110.

A memory 130 may comprise program memory and data memory. The program memory can store programs for controlling general operations of the portable terminal and control programs for matching a first search time for displaying the progress of fast forward/rewind to a user, and a second search time for performing fast forward/rewind in a moving picture play mode when fast forward/rewind is performed in the moving picture play mode according to an exemplary embodiment of the present invention. The data memory temporarily stores data generated during execution of the programs.

The controller 110 controls the overall operation of the portable terminal. The controller 110 may comprise the modem 120 and the codec. The controller 110 operates to compare the first search time for displaying the progress of fast forward/rewind and the second search time for performing fast forward/rewind in the moving picture play mode at time intervals when fast forward/rewind is performed in the moving picture play mode according to an exemplary embodiment of the present invention. If the compared first search time and second search time has a difference that is larger than an interval of time, the controller 110 operates to match the first search time and the second search time while increasing at least one of the first search time and the second search time by the difference. The time intervals may comprise tick units for processing events of a moving picture during play of the moving picture.

A camera unit 140 comprises a camera sensor for photographing image data and converting a photographed optical signal into an electric signal, and a signal processor for converting an analog image signal photographed by the camera sensor into digital data. The camera sensor is can be a CCD sensor and the signal processor may be implemented with a digital signal processor (DSP). The camera sensor and the signal processor may be integrated as one body or be separately provided.

A video processor unit 150 generates screen data for displaying an image signal output from the camera unit 140. The video processor unit 150 processes an image signal output from the camera unit 140 by the frame unit and outputs frame image data suitable to the characteristics and size of display unit 160. The video processor unit 150 comprises a video codec and compresses frame image data displayed on the display unit 160 according to a suitable compression method or reconstructs compressed frame image data into original frame image data. The video codec may be, for example, JPEG codec, MPEG-4 codec, or Wavelet codec. The video processor unit 150 can have an On Screen Display (OSD) function and may output OSD data according to a screen size displayed under the control of controller 110.

The display unit 160 displays an image signal output from the video processor unit 150 on a screen and displays user data output from the controller 110. Here, the display unit 160 can be, for example, a liquid crystal display (LCD), and if so, the display unit 160 may comprise an LCD controller, a memory for storing image data, and an LCD display device. When the LCD is implemented with a touch screen, the display unit 160 may also serve as an input unit. If fast forward/rewind is performed in the moving picture display mode according to an exemplary embodiment of the present invention, the display unit 160 displays a progress bar to show the status of fast forward/rewind to the user. The progress bar shows the user the progress of the moving picture.

A key input unit 127 comprises alphanumeric keys for inputting number and character information, and function keys for setting various functions. The key input unit 127 may also comprise a key for selecting fast forward/rewind in the moving picture play mode according to an exemplary embodiment of the present invention.

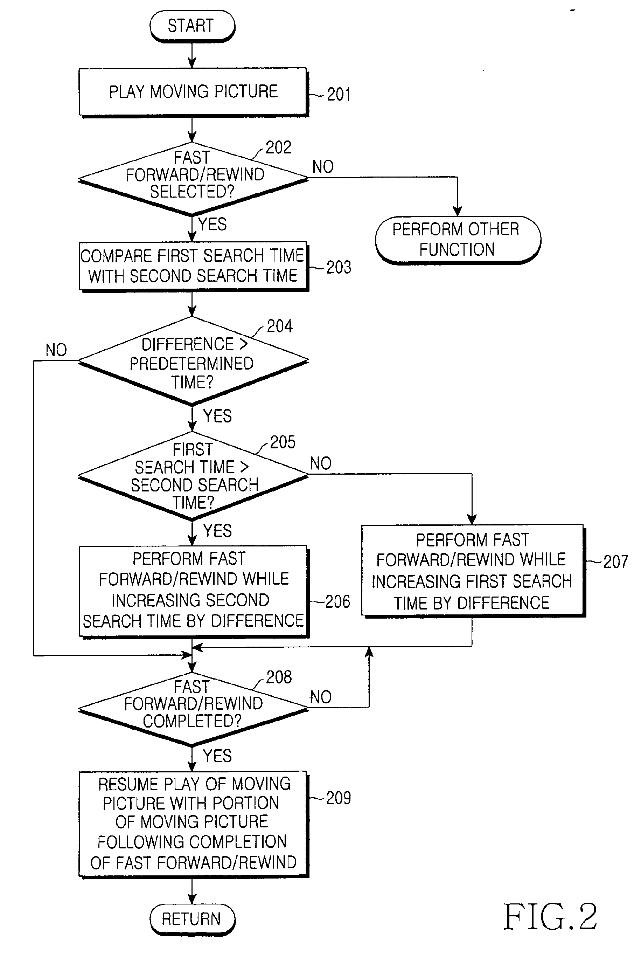

Hereinafter, a process of searching a moving picture in the moving picture play mode of the portable terminal will be described in detail with reference to FIG. 2.

FIG. 2 is a flowchart illustrating a method for searching a moving picture while matching search times in the moving picture play mode of the portable terminal according to an exemplary embodiment of the present invention.

An exemplary embodiment of the present invention will be described in detail with reference FIGs. 1 and 2.

Referring to FIG. 2, if fast forward/rewind is selected in a moving picture play mode of step 201 in which a moving picture is played in a portable terminal, the controller 110 senses the selection in step 202 and compares a first search time for displaying the progress of fast forward/rewind to a user and a second search time for performing fast forward/rewind in the moving picture play mode in step 203.

In step 203, the controller 110 checks the first search time for displaying the progress of fast forward/rewind through the progress bar showing progress of the moving picture in the moving picture play mode. At the same time, the controller 110 checks the second search time for performing fast forward/rewind on the played moving picture. The controller 110 compares the checked first search time and second search time at time intervals. If the first search time and the second search time have a difference larger than a period of time, for example, one second, the controller 110 senses the fact in step 204 and checks if the first search time is larger than the second search time in step 205.

If the first search time is larger than the second search time, the controller 110 senses the fact and performs fast forward/rewind while increasing the second search time by the difference between the first search time and the second search time in step 206.

For example, if fast forward is selected in the moving picture play mode, the first search time and the second search time are compared at time intervals. If the first search time is 6 seconds and the second search time is 4 seconds, the second search time is increased by the difference between the two, which for this example is 2 seconds, and then fast forward is performed.

If rewind is selected in the moving picture play mode, the first search time and the second search time are compared at time intervals. If the first search time is 5 seconds and the second search time is 2 seconds, the second search time is increased by the difference between the two, which for this example is 3 seconds, and then rewind is performed.

However, if the second search time is larger than the first search time, the controller 110 senses the fact and fast forward/rewind is performed while increasing the first search time by the difference between the first search time and the second search time in step 207.

Upon completing the fast forward/rewind in moving picture play mode in steps 202 through 207, the controller 110 senses the completion in step 208 and resumes play of the moving picture with a portion of the moving picture following completion of the fast forward/rewind in step 209. In step 209, if an Intra (I) frame exists at the time of completion of the fast forward/rewind, the controller 110 resumes play of the moving picture with the I-frame. However, if the I-frame does not exist, the controller 110 searches for a previous I-frame and resumes play of the moving picture with the found previous I-frame.

As described above, according to exemplary embodiments of the present invention, when a moving picture is searched in a moving picture play mode of a portable terminal, a search time for displaying the progress of fast forward/rewind to a user and an actual search time for performing fast forward/rewind in the moving picture play mode are matched with each other, thereby searching the moving picture with an accurate search time.

While the present invention has been shown and described with reference to certain exemplary embodiments thereof, it will be understood by those of ordinary skill in the art that various changes in form and detail may be made therein without departing from the spirit and scope of the invention as defmed by the appended claims and equivalents thereof.

## Claims

1. A method for searching a moving picture in a portable terminal, the method comprising:
comparing a first search time for displaying progress of a moving picture search to a user and a second search time for performing a function corresponding to the moving picture search if a moving picture search is selected in a moving picture play mode of the portable terminal; and
if the first search time and the second search time have a difference larger than a time period, performing the moving picture search in the moving picture play mode while increasing at least one of the first search time and
the second search time by the difference.

2. The method of claim 1, wherein the moving picture search indicates fast forward/rewind.

3. The method of claim 1, wherein the comparison between the first search time and the second search time is performed at time intervals.

4. A method for searching a moving picture in a portable terminal, the method comprising:
comparing a first search time for displaying progress of fast forward and a second search time for performing fast forward if fast forward is selected in a moving picture play mode of the portable terminal; and
if the first search time and the second search time have a difference larger than a time period, performing fast forward in the moving picture play mode while increasing at least one of the first search time and the second search time by the difference.

5. The method of claim 4, wherein performing fast forward comprises:
if the first search time and the second search time have a difference larger than a time period, obtaining the first search time and the second search time;
if the first search time is larger than the second search time, performing fast forward while increasing the second search time by the difference; and
if the second search time is larger than the first search time, performing fast forward while increasing the first search time by the difference.

6. The method of claim 4, wherein comparison between the first search time and the second search time is performed at time intervals.

7. The method of claim 4, further comprising:
if rewind is selected in a moving picture play mode of the portable terminal, comparing a first search time for displaying progress of rewind to a user and a second search time for performing rewind; and
if the first search time and the second search time have a difference larger than a time period, performing rewind in the moving picture play mode while increasing at least one of the first search time and the second search time by the difference.

8. The method of claim 7, wherein performing rewind comprises:
if the first search time and the second search time have a difference larger than a time period, obtaining the first search time and the second search time;
if the first search time is larger than the second search time, performing rewind while increasing the second search time by the difference; and
if the second search time is larger than the first search time, performing rewind while increasing the first search time by the difference.

9. The method of claim 7, wherein comparison between the first search time and the second search time is performed at time intervals.

10. A portable terminal, comprising:
a display unit; and
a controller configured to compare a first search time for displaying progress of fast forward/rewind and a second search time for performing fast forward/rewind in a moving picture play mode at time intervals, wherein if the compared first search time and second search time have a difference that is larger than a time period, the controller operates to substantially match the first search time and the second search time while increasing at least one of the first search time and the second search time by the difference.

11. The portable terminal of claim 10, wherein the time intervals comprise tick units for processing events of a moving picture during play of the moving picture.
